# EUROPÄISCHE PATENTSCHRIFT

(11) **EP 0 303 185 B1**
(45) Veröffentlichungstag und Bekanntmachung des Hinweises auf die Patenterteilung: **17.03.1993**
(21) Anmeldenummer: 88112701.3
(22) Anmeldetag: 04.08.1988
(51) Int. Cl.: C09B 1/50

(54) **Verfahren zur Herstellung von 1-Amino-4-hydroxy-2-(6'-hydroxyhexoxy)-anthrachinon**
Process for the preparation of 1-amino-4-hydroxy-2-(6'hydroxyhexoxy)-anthraquinone
Procédé de préparation de la 1-amino-4-hydroxy-2-(6'hydroxyhexoxy)-anthraquinone

(30) Priorität: 13.08.1987 DE 3726983
(43) Veröffentlichungstag der Anmeldung: 15.02.1989
(73) Patentinhaber: BASF Aktiengesellschaft, 67063 Ludwigshafen (DE)
(72) Erfinder: Hoch, Helmut, Dr., D-6719 Weisenheim (DE)

(56) Entgegenhaltungen:
- EP-A- 0 071 576
- FR-A- 2 197 858
- FR-A- 2 223 358
- FR-A- 2 260 562

## Beschreibung

Diese Anthrachinonverbindung ist ein wertvoller Dispersionsfarbstoff für das Färben von PES-Fasermaterial und seit längerem bekannt.

Nach der DE-PS 1 209 680 erhält man den Farbstoff der genannten Art durch Umsetzen von 1-Amino-4-hydroxy-2-phenoxyanthrachinon mit Hexandiol-1,6 in Gegenwart von alkalisch wirkenden Mitteln. Eine Variante des Verfahrens besteht darin, daß man die Phenoxyverbindung im Reaktionsgemisch in Gegenwart des Diols und des alkalisch wirkenden Mittels aus 1-Amino-4-hydroxy-2-brom oder -2-chlor-anthrachinon und einem Phenol intermediär herstellt und mit dem Diol weiter umsetzt.

Nachteilig ist bei diesem Verfahren der große Überschuß an Diol von ungefähr 8 bis 10 Mol Diol und im Falle der Variante der ebenfalls große Überschuß an Phenol von ca. 4 Mol Phenol und 9 Mol Diol je Mol Ausgangsverbindung. Wegen der großen Mengen an Diol und gegebenenfalls an Phenol muß das Reaktionsgemisch nach dem Abtrennen des Farbstoffs aufgearbeitet werden, was mit hohen Kosten verbunden ist.

In der CH-PS 457 665 wird die Herstellung von 1-Amino-4-hydroxy-2-(hydroxy-alkoxy)-anthrachinonen durch Umsetzen von 1-Amino-2-chlor-4-hydroxy-anthrachinon mit Diolen in Gegenwart von Kaliumhydroxid in Abwesenheit von Phenol durchgeführt. Die nach diesem Verfahren erhaltenen Farbstoffe sind nach Angaben der DE-OS 22 43 197 für die Verwendung als Dispersionsfarbstoffe für Polyesterfasern nicht genügend rein. Die im Farbstoff enthaltenen Nebenprodukte trüben den Farbton ab und geben den Färbungen schlechte coloristische Eigenschaften, wie schlechte Thermofixier- und Lichtechtheit, sowie verringertes Ziehvermögen.

Bei dem Verfahren der CH-PS dient das Diol gleichzeitig auch als Lösungsmittel bzw. als Reaktionsmedium, so daß das Verhältnis von Diol zur 2-Chlor-anthrachinonverbindung bei > 40:1 Mol liegt. D.h. dieses Verfahren hat die gleichen Nachteile wie das aus der DE-PS 1 209 680 bekannte.

Nach der DE-OS 24 05 782 werden 1-Amino-2-alkoxy-4-hydroxy-anthrachinon-Verbindungen hergestellt, indem man einen primären Alkohol mit 1-Amino-2-chlor-4-hydroxy-anthrachinon in Gegenwart von Phenol, alkalisch wirkenden Mitteln und Polyethylenglykolen umsetzt, wobei man entweder einen Überschuß an dem Alkohol als Lösungsmittel verwendet oder ein weiteres Lösungsmittel, z.B. N-Methylpyrrolidon, N,N-Dimethylformamid oder Dimethylsulfoxid zusetzt. Diese Lösungsmittel sind nach den Angaben der EP-A-71 576, S. 1, Abs. 3 für eine technische Herstellung der 1-Amino-2-alkoxy-4-hydroxyanthrachinon nicht optimal, da ihre Beständigkeit, insbesondere bei hohen Temperaturen in Gegenwart der alkalisch wirkenden Mittel zu wünschen übrig läßt und die Regeneration dieser Lösungsmittel aus der Mutterlauge sehr aufwendig ist. Dies trifft auch für das Diol zu, da das Verhältnis von 1-Amino-2-chlor-4-hydroxyanthrachinon zu Diol selbst in den günstigen Fällen bei Zusatz von polaren organischen Lösungsmitteln noch ungefähr 1:8 Mol (vgl. Beispiel 34) beträgt und eine technische Rückgewinnung des Diols aus der Mutterlauge fast unüberwindbare Schwierigkeiten bereitet.

In der DE-OS 22 43 197 wird ein Verfahren beschrieben, nach dem man praktisch reine 1-Amino-4-hydroxy-2-(hydroxyalkoxy)-anthrachinone durch Umsetzen von 1-Amino-4-hydroxy-2-halogen-anthrachinonen mit Diolen in Gegenwart von alkalisch wirkenden Mitteln und von Phenolen erhält, wenn man die Umsetzung in mit Wasser mischbaren und gegenüber den alkalisch wirkenden Mitteln praktisch inerten Lösungsmitteln durchführt. Um einen vollständigen und raschen Umsatz zu erreichen, ist ein Überschuß an Diol zweckmäßig und erforderlich. Nach den Angaben auf Seite 6 der DE-OS beträgt das Verhältnis von 1-Amino-4-hydroxy-2-halogen-anthrachinon zu Diol im allgemeinen 1:6 bis 1:12 Mol, vorzugsweise 1:8 bis 1:9 Mol. Somit ergibt sich auch bei diesem Verfahren: die kostenaufwendige Regeneration des Überschusses an Diol und dessen Trennung von den Beimengungen.

Nach der EP-A-71 576 erhält man 1-Amino-4-hydroxy-2-alkoxy-anthrachinone durch Umsetzen von 1-Amino-2-chlor-4-hydroxy-anthrachinon mit Alkoholen oder Phenolen in Gegenwart eines alkalisch wirkenden Mittels und in Gegenwart eines quartären Ammonium- oder Phosphonium-Salzes oder eines Kronenethers als Phasentransferkatalysator in einem organischen Lösungsmittel.

Diese Verfahrensweise hat den Nachteil des Handlings, der ökologischen und toxikologischen Probleme der verwendeten Lösungsmittel und Phasentransferkatalysatoren und der Regenerationskosten von organischen Lösungsmitteln wie Chlorbenzol, Nitrobenzol oder Ethylenglykolethern. Das nach dem Verfahren der EP-A angewendete Molverhältnis von Diol zu 1-Amino-2-chlor-4-hydroxy-anthrachinon liegt bei 1:2 bis 1:10, vorzugsweise 1:2 bis 1:4.

Der Zusatz von quartären Ammoniumsalzen bzw. Phosphoniumsalzen erfolgt in Größenordnungen bis zu 20 Gew.%, bezogen auf die 2-Halogenanthrachinonverbindung, und ist deshalb in hohem Maß ökologisch bedenklich und kostenwirksam, da diese Salze bei der Aufarbeitung nicht wiedergewonnen werden können.

Bei der Nacharbeitung des Beispiels 5 der EP-A-71 756, das die Umsetzung von 1-Amino-2-chlor-4-hydroxy-anthrachinon mit Hexandiol-1,6 im Verhältnis 1:3 Mol beschreibt, wurde ein Farbstoff erhalten, der Polyester deutlich trüber und blasser anfärbte als die Farbstoffe, die nach der DE-PS 12 09 680, Beispiel 2,2, der DE-OS 22 43 197, Beispiel 1 oder nach der DE-OS 24 05 782, Beispiel 34 erhalten wurden. Der nach dem Verfahren der EP-A erhaltene Farbstoff führte bei Kreuzspul- und Wickelkörperfärbungen zu Abfiltration. Beim Verstricken des so gefärbten Garns erhielt man aus coloristischer Sicht unbrauchbare Gewebe. Die chromatographische Analyse des nach der EP-A erhaltenen Farbstoffs ergibt, daß dieser nur 74 Gew.% an 1-Amino-2-(6′-hydroxyhexoxy)-4-hydroxyanthrachinon neben einem Nebenprodukt von ungefähr 21 Gew.% (siehe Vergleichsbeispiel 4) enthält.

Versucht man den Nachteil des Verfahrens der DE-PS 1 209 680, der in der schwierigen Regeneration des im Überschuß verwendeten Diols besteht, zu verringern oder zu umgehen, indem man das Verhältnis von Diol zur 2-Halogenanthrachinonverbindung erniedrigt, dann erhält man Farbstoffe, welche Polyesterfasermaterial in der Regel umso trüber, blauer und farbschwächer anfärben, je niedriger das Verhältnis ist. Bei Wickelkörperfärbungen zeigen sich entsprechend zunehmend Abfiltrationen auf der Innenseite des Wickelkörpers. Durch Verstricken solcher gefärbter Garne erhält man unegal gefärbte, schipprige Gewebe, die wertlos sind.

Nach der Analyse und der Strukturaufklärung hat dieses den Farbton abtrübende und abfiltrierte Nebenprodukt die Formel (II)

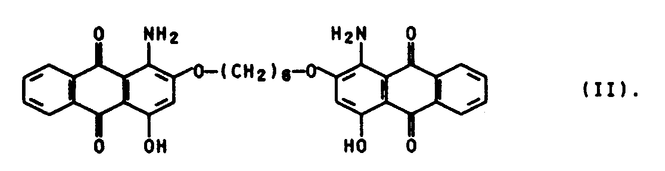

(II) wird im folgenden auch als Diether bezeichnet. (II) entsteht in zunehmender Menge, wenn bei der Synthese das Verhältnis von Hexandiol-1,6 zu 1-Amino-2-halogen-4-hydroxyanthrachinon < 8:1 Mol, insbesondere < 6:1 Mol ist. Bie einem Verhältnis von 2:1 wird ein Farbstoff erhalten, der etwa 50 Gew.% an (II) enthält.

Der Diether (II) kann vom Farbstoff (I) der Formel 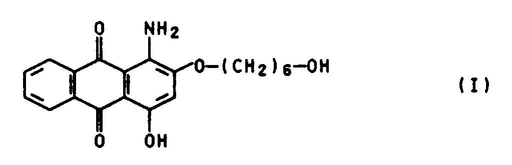
durch Säulenchromatografie (über Sephadex) und anschließender fotometrischer Bestimmung bei 523 nm gut abgetrennt und quantitative bestimmt werden.

Die geschilderten Nachteile werden bei allen Verfahren des Standes der Technik bei der Herstellung von (I) beobachtet.

Aufgabe der vorliegenden Erfindung war es, ein Verfahren aufzufinden, nach dem auf direktem Wege aus 1-Amino-2-halogen-4-hydroxyanthrachinon und Hexandiol-1,6 der Farbstoff (I) in einer für Färbezwecke geeigneten Reinheit ohne die bekannten Nachteile der Regeneration des bisher erforderlichen hohen Überschusses an dem Diol erhalten wird.

Die Erfindung betrifft ein Verfahren zur Herstellung von 1-Amino-2-(6′-hydroxyhexoxy)-4-hydroxyanthrachinon (I) durch Umsetzen von 1-Amino-2-phenoxy-4-hydroxyanthrachinon (III) oder von einem Gemisch aus 1-Amino-2-chlor(brom)-4-hydroxyanthrachinon (IV) und einem Phenol mit Hexandiol-1,6 im Überschuß in Gegenwart eines alkalisch wirkenden Mittels in der Wärme, das dadurch gekennzeichnet ist, daß man bei der Umsetzung je Mol (III) bzw. (IV) 2 bis 6 Mol Hexandiol-1,6 anwendet und das Gemisch in Gegenwart von 50 bis 150 Gew.%, bezogen auf (III) bzw. (IV), Polyethylenglykolen, Ethylenoxidaddukten an Phenolen, an C₁- bis C₂₀-Alkylphenolen, an C₁- bis C₂₀-Alkanolen oder Gemischen davon auf 125 bis 135°C erwärmt, wobei ein Gemisch aus (I) und 1′,6′-Bis-(1-amino-4-hydroxyanthrachinonyloxy)-hexan (II) entsteht und anschließend das erhaltene Reaktionsgemisch auf 140 bis 150°C erwärmt bis der Gehalt an (II) ≦ 2 Gew.%, bezogen auf (I), beträgt.

Nach dem Verfahren erhält man (I) in hoher Ausbeute und hoher Reinheit. Der Gehalt an (II) kann auf Werte von 2 Gew.% und darunter reduziert werden.

Überraschend war, daß bei der Synthese erwartungsgemäß in hohem Anteil entstehende Diether (II) durch Erwärmen des Reaktionsgemisches auf 140 bis 150°C auf den Gehalt von 2 Gew.% und darunter reduziert werden kann. Um (I) in hoher Ausbeute und Reinheit zu erhalten, ist die angegebene Reaktionsführung Umsetzung bei 125 bis 135°C und nachfolgendes Erhitzen auf Temperaturen von 140 bis 150°C unbedingt erforderlich. Führt man die Umsetzung von vornherein bei 140 bis 150°C durch, dann erhält man den Farbstoff in geringerer Ausbeute und mit schlechteren coloristischen Eigenschaften.

Bei dem Verfahren gemäß der vorliegenden Erfindung wird 1-Amino-2-halogen-4-hydroxyanthrachinon (IV) mit dem Diol in an sich bekannter Weise ungesetzt, wobei das Verhältnis von (IV) zum Hexandiol-1,6 1:2 bis 1:6, vorzugsweise 1:3 bis 1:4 Mol beträgt. Vorteilhafterweise erfolgt die Umsetzung entsprechend den Angaben in der DE-OS 24 05 782 in Gegenwart von Polyethylenglykolen bei 125 bis 135°C.

Zweckmäßigerweise verfährt man so, daß man zur Mischung aus dem 1-Amino-2-halogen-4-hydroxyanthrachinon, dem alkalisch wirkenden Mittel, dem Phenol und dem Polyethylenglykol bzw. den Ethylenoxidaddukten das Hexandiol zugibt und das Gemisch auf 125 bis 135°C erwärmt. Die Umsetzung ist in der Regel nach 4 bis 8 Stunden beendet. Bei diesen Temperaturen entsteht als Verfahrensprodukt ein Gemisch, das 70 bis 85 Gew.% (I) und 30 bis 15 Gew.% (II) enthält.

Das Reaktionsgemisch wird dann auf Temperaturen von 140 bis 150°C, vorzugsweise auf 145 bis 150°C erwärmt und bei dieser Temperatur gehalten bis der Gehalt an (II) bei 2 Gew.%, bezogen auf das Gemisch aus (I) und (II), oder darunter liegt. Hierzu sind im allgemeinen 4 bis 16 Stunden bei den genannten Temperaturen erforderlich.

Als 1-Amino-2-halogen-4-hydroxyanthrachinon (IV) kommen die 2-Brom- und die 2-Chlorverbindungen in Betracht, von denen die 2-Chlorverbindung bevorzugt ist.

Wegen der Verwendung von (IV) als Ausgangsverbindung muß die Umsetzung zu (I) in Gegenwart eines Phenols durchgeführt werden. Hierzu sind je Mol (IV) 0,5 bis 1,5 Mol des Phenols ausreichend. Als Phenol kommen die Kresole, die Xylenole, p-Chlorphenol, vorzugsweise der nicht weiter substituierte Grundkörper, das Phenol, in Betracht.

Verwendet man 2-Phenoxy- oder 2-Methoxy-1-amino-4-hydroxyanthrachinon als Ausgangsverbindung, dann entfällt der Zusatz an Phenol.

Als alkalisch wirkende Mittel kommen für die Reaktion Alkalimetallhydroxide, wie Natriumhydroxid, Kaliumhydroxid, Alkalimetallcarbonate, wie Natriumhydrogencarbonat, Kaliumhydrogencarbonat, Natriumcarbonat, Kaliumcarbonat und Gemische dieser Verbindungen in Betracht. Von den genannten Verbindungen sind Kaliumhydroxid und vor allem Kaliumhydrogencarbonat und Kaliumcarbonat besonders bevorzugt. In jedem Fall werden je Mol 2-Halogenanthrachinon mindestens 1 Äquivalent an dem alkalisch wirkenden Mittel benötigt. Vorteilhafterweise werden 1,5 bis 2 Äquivalente des alkalisch wirkenden Mittels angewendet.

Als Polyethylenglykole kommen für das Verfahren gemäß der Erfindung solche mit einem Molekulargewicht von 150 und darüber in Betracht. Die Größe des Molekulargewichts hat auf die Reaktionsgeschwindigkeit keinen großen Einfluß; so zeigt z.B. ein Polyglykol mit einem Molekulargewicht von ungefähr 10.000 den gleichen günstigen Einfluß auf die Umsetzung wie ein solches mit einem Molekulargewicht von ungefähr 200 oder 1.000. Als Polyethylenglykole sind z.B. Triethylenglykol, Tetraethylenglykol, Polyglykole mit einem mittleren Molekulargewicht von 150 bis zu ungefähr 10.000 für die Durchführung des Verfahrens gemäß der Erfindung geeignet. Die Polyglykole liegen in der Regel als Gemisch vor.

Ebenso vorteilhaft können Ethylenoxidaddukte an Phenol, C₁- bis C₂₀-Alkylphenolen und C₁- bis C₂₀-Alkanolen und Gemische davon anstelle von Polyethylenglykolen verwendet werden. Im einzelnen sind z.B. das Addukt aus Nonylphenol und im Mittel 14 EO, Nonylphenol und im Mittel 20 EO, Nonylphenol und im Mittel 10 EO, Isooctylphenol und im Mittel 10 EO und C₁₆/C₁₈-Alkanolgemisch mit im Mittel 15 EO zu nennen.

Die Menge an diesen Mitteln liegt bei 50 bis 150 Gew.%, bezogen auf die Menge an der Anthrachinonverbindung (III) bzw. (IV).

Das Verfahren soll durch die folgenden Beispiele zusätzlich erläutert werden. Die Teile beziehen sich auf das Gewicht. Volumenteile verhalten sich zu Gewichtsteilen wie Liter zum Kilogramm. Die angegebenen Prozente sind Gewichtsprozente.

### Beispiel 1

Ein Gemisch aus 60 Teilen Hexandiol-1,6, 7,5 Teilen Phenol und 50 Teilen des Addukts aus 14 Ethylenoxid an Nonylphenol wird auf 110°C geheizt. Bei dieser Temperatur werden unter leichtem Stickstoffstrom 37,6 Teile 1-Amino-2-chlor-4-hydroxy-anthrachinon (Reingehalt 93 %; = Rosachlorid) und 35 Teile wasserfreie Pottasche eingetragen. Dann wird auf 130°C aufgeheizt und unter Rühren bei 130 bis 135°C gehalten. Nach 6 Stunden zeigt eine Probe im Dünnschichtchromatogramm die völlige Umsetzung des Rosachlorids an. Die Auftrennung der Probe mit Hilfe der Säulenchromatographie ergibt einen Gehalt von 75,8 % an (I) und von 14,9 % an Diether (II).

Danach wird das Reaktionsgemisch auf 145 bis 148°C unter Rühren erhitzt und 10 Stunden bei dieser Temperatur gehalten. Nach jeweils 2 Stunden bei 145/148°C wird eine Probe genommen und diese chromatographisch auf den Gehalt an Farbstoff und an Diether analysiert. Die Gehalte an (I) und (II) sind in der Tabelle angegeben.

| | | Gehalt an Diether (II) [%] | (I) [%] |
|---|---|---|---|
| Farbstoff-Bildung | nach 6 Std. bei 130/135°C | 14,9 | 75,8 |
| Diether-Abbau: | nach 2 Std. bei 145/148°C | 11,0 | 78,6 |
| | nach 4 Std. bei 145/148°C | 7,4 | 84,6 |
| | nach 6 Std. bei 145/148°C | 1,7 | 86,3 |
| | nach 8 Std. bei 145/148°C | 1,5 | 87,9 |
| | nach 10 Std. bei 145/148°C | 1,2 | 91,6 |

Der Ansatz wird danach auf 100°C abgekühlt und mit 140 Teilen Wasser verdünnt. Die Mischung wird 2 Stunden bei 60 bis 65°C gerührt, heiß filtriert und das Filtergut hell- und neutralgewaschen. Ausbeute: 37 Teile 1-Amino-2-(6′-hydroxyhexoxy)-4-hydroxyanthrachinon, das nach der säulenchromatographischen Analyse einen Gehalt von 91,6 % an (I) und einem Gehalt von 1,2 % an (II) aufweist. Der Farbstoff liefert auf PES Rosafärbungen von hoher Reinheit und Brillanz und einwandfreie Kreuzspul- und Wickelkörperfärbungen.

### Beispiel 2

Ein Gemisch aus 70 Teilen Hexandiol-1,6, 10 Teilen Phenol und 44 Teilen eines Polyglykols (n = 8-10 Ethylenoxid) werden unter Überleiten von Stickstoff auf 100°C geheizt. Bei dieser Temperatur werden 37 Teile 1-Amino-2-chlor-4-hydroxy-anthrachinon (Reingehalt 93 %) und 35 Teile wasserfreie Pottasche eingetragen. Anschließend wird, unter weiterem Überleiten von Stickstoff, auf 130 bis 135°C geheizt und 6 Stunden bei dieser Temperatur gehalten. Eine Probe zeigte dann im Dünnschichtchromatogramm die völlige Umsetzung des Rosachlorids an. Die säulenchromatographische Analyse der Probe ergab einen Gehalt von 72,7 % an (I) und 19,7 % an Diether (II). Danach wird das Reaktionsgemisch unter Rühren 14 Stunden auf 145 bis 148°C erhitzt. Nach jeweils 2 Stunden bei 145/148°C wird eine Probe säulenchromatographisch analysiert. Die Analyseergebnisse sind in der nachstehenden Tabelle angegeben.

| | | Gehalt an Diether (II) [%] | (I) [%] |
|---|---|---|---|
| Farbstoff-Bildung | nach 6 Std. bei 130/135°C | 19,7 | 72,7 |
| Diether-Abbau: | nach 2 Std. bei 145/148°C | 16,5 | 76,5 |
| | nach 4 Std. bei 145/148°C | 14,0 | 77,6 |
| | nach 8 Std. bei 145/148°C | 11,2 | 80,8 |
| | nach 10 Std. bei 145/148°C | 9,8 | 82,4 |
| | nach 12 Std. bei 145/148°C | 5,0 | 85,1 |
| | nach 14 Std. bei 145/148°C | 1,7 | 91,7 |

Der Ansatz wird danach auf 100°C abgekühlt und mit 140 Teilen Wasser verdünnt. Die Mischung wird 2 Stunden bei 60 bis 65°C gerührt, heiß filtriert und das Nutschgut hell- und neutralgewaschen. Man erhält 37,4 Teile Farbstoff, der nach der säulenchromatographischen Analyse einen Gehalt von 91,7 % an (I) und von 1,7 % an (II) aufweist. Der Farbstoff gibt auf Polyester rosa Färbungen von hoher Brillanz und einwandfreie Kreuzspul- und Wickelkörperfärbungen.

### Beispiel 3

Ein Gemisch aus 42 g Hexandiol-1,6, 6,5 Teilen Phenol und 50 Teilen des Addukts von 14 Ethylenoxid an Nonylphenol wird auf 100°C geheizt und bei dieser Temperatur werden unter leichtem Stickstoffstrom 37,6 Teile 1-Amino-2-chlor-4-hydroxy-anthrachinon (Reingehalt 93 %) und 35 Teile wasserfreie Pottasche eingetragen. Dann wird auf 130°C geheizt und 6 Stunden unter Rühren bei 130 bis 135°C gehalten. Es entsteht ein Gemisch aus Farbstoff (I) unter Diether (II) im Gewichtsverhältnis 73 % zu 20 %.

Der Abbau des Diethers (II) zu Farbstoff (I) erfolgt durch 12stündiges Erhitzen des Reaktionsgemischs auf 145 bis 148°C unter Rühren.

Man isoliert 37 Teile Farbstoff, der nach der säulenchromatographischen Analyse einen Gehalt von 92,5 % an (I) und von 2,0 % an (II) aufweist. Der Farbstoff färbt Polyester in brillanten Rosatönen mit den im Beispiel 1 angegebenen anwendungstechnischen Eigenschaften.

### Vergleichsbeispiel 1 (DE-PS 1 209 680, Beispiel 2)

a) Nach den Angaben der DE-PS 1 209 680, Beispiel 2,2 wurden 30 Teile 1-Amino-2-brom-4-hydroxyanthrachinon mit 30 Teilen Phenol und 80 Teilen Hexandiol in Gegenwart von 12 Teilen Kaliumhydroxid umgesetzt.
   Ausbeute: 24 Teile Farbstoff, der nach der chromatographischen Analyse 76 % (I) und 11 % (II) enthält.
   Der Farbstoff färbt PES deutlich trüber und blauer als der nach Beispiel 1 erhaltene Farbstoff.
b) Die Umsetzung erfolgte wie unter a) angegeben, jedoch wurde die äquivalente Menge (= 27 Teile) 1-Amino-2-chlor-4-hydroxy-anthrachinon verwendet.
   Ausbeute: 24 Teile Farbstoff, der 75 % an (I) und 4 % an (II) enthält.
   Der Farbstoff gibt deutlich trübere und blauere Färbungen als der nach Beispiel 1 erhaltene Farbstoff.

### Vergleichsbeispiel 2 (DE-PS 1 209 680, Beispiel 1)

Nach den Angaben der DE-PS 1 209 680, Beispiel 1, wurden 47 Teile 1-Amino-2-phenoxy-4-hydroxyanthrachinon mit 197 Teilen Hexandiol in Gegenwart von 6 Teilen Kaliumhydroxid 2,5 Stunden bei 135°C umgesetzt.
Ausbeute: 43 Teile Farbstoff, der nach der chromatographischen Analyse 18 % an (I) und noch 82% an nicht umgesetztem 1-Amino-2-phenoxy-4-hydroxyanthrachinon enthält. Verbindung II ist nicht nachweisbar.

### Vergleichsbeispiel 3 (DE-PS 1 209 680, Beispiel 2,1)

Nach den Angaben des Beispiels 2,1 der DE-PS 1 209 680 wurden 47 Teile 1-Amino-2-phenoxy-4-hydroxyanthrachinon mit 130 Teilen Hexandiol in Gegenwart von 10 Teilen Kaliumhydroxid 4 Stunden bei 140°C umgesetzt.
Ausbeute: 42 Teile Farbstoff, der nach der chromatographischen Analyse 34 % an (I) und noch 65% an nicht umgesetztem 1-Amino-2-phenoxy-4-hydroxyanthrachinon enthält. Verbindung II ist nicht nachweisbar.

### Vergleichsbeispiel 4

a) Nach den Angaben der EP-A-71 576, Beispiel 5, werden zu 30 Teilen 1-Amino-2-chlor-4-hydroxyanthrachinon (Reingehalt 93 %) 30 Vol.-Teile wasserfreies Nitrobenzol, 5 Teile Tetrabutylammoniumbromid, 10,4 Teile Phenol, 38 Teile Hexandiol-1,6 und 13,2 Teile wasserfreie Pottasche gegeben. Die Mischung wird unter leichtem Stickstoffstrom auf 150 bis 155°C geheizt und 8 Stunden bei dieser Temperatur gerührt. Danach wird mit 90 Vol.-Teilen Methanol verdünnt, bei Raumtemperatur filtriert, mit Methanol und Wasser gewaschen und getrocknet. Man erhält 28,9 Teile Farbstoff, der nach der säulenchromatographischen Analyse einen Gehalt von 74,4 % an (I) und einen Gehalt von 21,2 % an (II) aufweist. Im Vergleich zu den Farbstoffen, die nach dem Verfahren der Erfindung erhalten werden, liefert der Farbstoff deutlich trübere und blauere Polyesterfärbungen. Die Kreuzspul- und Wickelkörperfärbungen sind nicht einwandfrei.
b) Verfährt man nach a), verwendet jedoch anstelle von Tetrabutylammoniumbromid die gleiche Menge Distearyldimethylammoniumchlorid, dann erhält man 26 Teile Farbstoff, der 65 % an (I) und 17 % an (II) enthält.
   Der Farbstoff gibt im Vergleich zu dem nach Beispiel 1 erhaltenen auf Polyester trübere und blauere Färbungen. Die Kreuzspul- und Wickelkörperfärbungen sind nicht einwandfrei.

## Patentansprüche

1. Verfahren zur Herstellung von 1-Amino-2-(6′-hydroxyhexoxy)-4-hydroxyanthrachinon (I) durch Umsetzen von 1-Amino-2-phenoxy-4-hydroxyanthrachinon (III) oder von einem Gemisch aus 1-Amino-2-chlor(brom)-4-hydroxyanthrachinon (IV) und einem Phenol mit Hexandiol-1,6 im Überschuß in Gegenwart eines alkalisch wirkenden Mittels in der Wärme, dadurch gekennzeichnet, daß man bei der Umsetzung je Mol (III) bzw. (IV) 2 bis 6 Mol Hexandiol-1,6 anwendet und das Gemisch in Gegenwart von 50 bis 150 Gew.%, bezogen auf (III) bzw. (IV), Polyethylenglykolen, Ethylenoxidaddukten an Phenolen, an C₁- bis C₂₀-Alkylphenolen, an C₁- bis C₂₀-Alkanolen oder Gemischen davon auf 125 bis 135°C erwärmt, wobei ein Gemisch aus (I) und 1′,6′-Bis-(1-amino-4-hydroxyanthrachinonyloxy)-hexan (II) entsteht und anschließend das erhaltene Reaktionsgemisch auf 140 bis 150°C erwärmt bis der Gehalt an (II) ≦ 2 Gew.%, bezogen auf (I), beträgt.

## Claims

1. A process for preparing 1-amino-2-(6'-hydroxyhexoxy)-4-hydroxyanthraquinone (I) by reacting 1-amino-2-phenoxy-4-hydroxyanthraquinone (III) or a mixture of 1-amino-2-chloro(bromo)-4-hydroxyanthraquinone (IV) and a phenol with 1,6-hexanediol in excess in the presence of an alkaline agent at elevated temperatures, which comprises using in the reaction per mole of (III) or (IV) from 2 to 6 moles of 1,6-hexanediol and heating the mixture in the presence of from 50 to 150 % by weight, based on (III) or (IV), of a polyethylene glycol, of an ethylene oxide adduct on a phenol, on a C₁-C₂₀-alkylphenol, on a C₁-C₂₀-alkanol or a mixture thereof at from 125 to 135°C to produce a mixture of (I) and 1',6'-bis(1-amino-4-hydroxyanthraquinonyloxy)hexane (II) and subsequently heating the reaction mixture obtained at from 140 to 150°C until the proportion of (II) is ≦ 2 % by weight, based on (I).

## Revendications

1. Procédé de préparation de la 1-amino-2-(6'-hydroxyhexyloxy)-4-hydroxyanthraquinone (I) par réaction de la 1-amino-2-phénoxy-4-hydroxyanthraquinone (III) ou d'un mélange de 1-amino-2-chloro(bromo)-4-hydroxyanthraquinone (IV) et d'un phénol avec l'hexanediol-1,6 en excès en présence d'un milieu à action alcaline à chaud, caractérisé en ce qu'on utilise pour la réaction par mole de (III) ou (IV) 2 à 6 moles d'hexanediol-1,6 et on chauffe le mélange à 125-135°C en présence de 50 à 150% en poids, par rapport à (III) ou (IV), de polyéthylèneglycols, de produits d'addition d'oxyde d'éthylène sur des phénols, sur des (alkyl en C₁-C₂₀)phénols, sur des alcanols en C₁-C₂₀ ou des mélanges de ceux-ci, avec formation d'un mélange de (I) et de 1',6'-bis(1-amino-4-hydroxyanthraquinonyloxy)-hexane (II), et on chauffe ensuite le mélange réactionnel résultant à 140-150°C jusqu'à ce que la teneur en (II) soit ≦ 2% par rapport à (I).
